**Europäisches Patentamt**

**European Patent Office**

**Office européen des brevets**

(19)

(11) Veröffentlichungsnummer: **0 088 953**

**A1**

(12)

# EUROPÄISCHE PATENTANMELDUNG

(21) Anmeldenummer: **83102066.4**

(22) Anmeldetag: **03.03.83**

(51) Int. Cl.³: **B 60 Q 1/00**
**B 60 S 1/08**
**//H04B9/00, B62D1/04**

(30) Priorität: **10.03.82 DE 3208558**

(43) Veröffentlichungstag der Anmeldung:
**21.09.83 Patentblatt 83/38**

(84) Benannte Vertragsstaaten:
**AT BE CH FR GB IT LI NL SE**

(71) Anmelder: **PREH, Elektrofeinmechanische Werke Jakob Preh Nachf. GmbH & Co.**
**Postfach 1740 Schweinfurter Strasse 5**
**D-8740 Bad Neustadt/Saale(DE)**

(72) Erfinder: **Vogt, Alfred, Ing. grad.**
**Stadtblick 3**
**D-8740 Salz(DE)**

(72) Erfinder: **Koch, Hans-Peter, Dipl.-Ing.**
**Wagstätter Strasse 35**
**D-8740 Bad Neustadt/Saale(DE)**

(54) **Elektrische Schalteinrichtung eines Kraftfahrzeugs.**

(57) Bei einer Einrichtung zum Schalten elektrischer Aggregate (23) eines Kraftfahrzeugs sind Bedientasten (3) für die Aggregate (23) am Lenkrad (1) angeordnet.

An der Lenkradnabe (9) ist ein Infrarotsender (4) mit Oszillator und Kodierer und wenigstens ein Sendebauteil (6, 7, 8) befestigt. An der feststehenden Lenkradsäule (11) ist wenigstens ein Infrarot-Empfangsbauteil (12) angeordnet, das an einen Dekodierer (18) angeschlossen ist. Dieser schaltet die Aggregate (23). Damit in jeder Drehstellung des Lenkrads (1) wenigstens ein Empfangsbauteil (12) im Strahlungsbereich eines Sendebauteils (6, 7, 8) liegt, sind mehrere Sendebauteile (6, 7, 8) und/oder mehrere Empfangsbauteile (12) am Umfang der Lenkradnabe bzw. der Lenkradsäule (11) verteilt.

Fig. 2

EP 0 088 953 A1

J P-4/82

Preh-Elektrofeinmechanische Werke,

Jakob Preh Nachf. GmbH & Co., 8740 Bad Neustadt/Saale

Elektrische Schalteinrichtung eines Kraftfahrzeugs

Die Erfindung betrifft eine Einrichtung zum Schalten elektrischer Aggregate eines Kraftfahrzeugs, wobei Bedientasten für die Aggregate an dem Lenkradkranz oder Lenkradspeichen des Kraftfahrzeugs angeordnet sind, welche über die Lenkradnabe und die feststehende Lenkradsäule an die Aggregate angeschlossen sind.

Eine derartige Einrichtung ist in der DE-OS 14 41 819 und der DE-OS 30 18 247 beschrieben. Bei solchen Einrichtungen werden die Signale der am drehbaren Lenkrad angeordneten Bedientasten über Schleifringkontakte auf in der feststehenden Lenkradsäule verlegte Leitungen über-

- 2 -

tragen. Für jede Bedientaste sind zwei Schleifringkontakte vorzusehen. Entsprechend viele Schleifrinkontakte werden bei mehreren Bedientasten benötigt. Eine Vielzahl von Schleifringkontakten an der Lenksäule bzw. an dem Lenkrad anzubringen, ist jedoch schon aus baulichen Gründen kaum möglich.

Aufgabe der Erfindung ist es, eine Einrichtung der eingangs genannten Art vorzuschlagen, bei der für die Übertragung der Signale der Bedientasten zwischen Lenkrad und Lenksäule keine elektromechanischen Kontaktverbindungen erforderlich sind.

Erfindungsgemäß ist obige Aufgabe dadurch gelöst, daß an der Lenkradnabe ein Infrarotsender mit Oszillator und Kodierer und wenigstens einem Sendebauteil befestigt ist, daß die Bedientasten an den Kodierer angeschlossen sind, daß an der Lenkradsäule wenigstens ein Infrarot-Empfangsbauteil angeordnet ist, das an einen Empfänger mit Dekodierer und Treiberstufe angeschlossen ist, daß der Dekodierer mit Schaltern der Aggregate verbunden ist und daß mehrere Sendebauteile und/oder mehrere Empfangsbauteile so am Umfang der Lenkradnabe bzw. der Lenksäule verteilt sind, daß in jeder Drehstellung des Lenkrads wenigstens ein Empfangsbauteil im Strahlungsbereich eines Sendebauteils liegt. Bei dieser Einrichtung erfolgt die Signalübertragung im Bereich zwischen dem Lenkrad und der Lenkradsäule über eine Infrarotstrecke. Durch die Anordnung der Sendebauteile bzw. Empfangsbauteile ist sichergestellt, daß bei einer Lenkraddrehung die Infrarotstrecke nicht unterbrochen wird. Für die Signalübertragung von den Bedientasten zu den betreffenden
Aggregaten erübrigen sich Schleifringkontakte. Es sind
auch keine aufwendigen Kabelbäume zu verlegen.

In bevorzugter Ausgestaltung der Erfindung sind am
Umfang der Lenkradnabe mehrere Sendebauteile angeordnet,
deren gemeinsamer Abstrahlbereich die Lenkradnabe in
einer ringförmigen Zone umschließt, und in dieser Zone
das Empfangsbauteil angeordnet ist.

In Ausgestaltung der Erfindung ist der Dekodierer entfernt vom Empfangsbauteil im Bereich des Armaturenbretts
des Kraftfahrzeugs angeordnet. Damit ist für die Signalübertragung an der Lenkradsäule nur eine einadrige
Leitung nötig. Der Dekodierer ist an einer Stelle angeordnet, die den zu schaltenden Aggregaten möglichst nahe
liegt.

Um Störungen des Empfangsbauteils durch Fremdlicht zu
vermeiden, ist der Strahlungsbereich der Sendebauteile
außen von einer Blende abgeschlossen und die Blende
überragt das Empfangsbauteil. Die Blende schützt auch
gleichzeitig die Bauteile vor Verschmutzung.

Weitere vorteilhafte Ausgestaltungen der Erfindung
ergeben sich aus der folgenden Beschreibung eines
Ausführungsbeispiels und den Unteransprüchen. In der
Zeichnung zeigen:

- 4 -

Figur 1   schematisch ein Lenkrad an einer Lenksäule und
Figur 2   ein Blockschaltbild der Einrichtung.

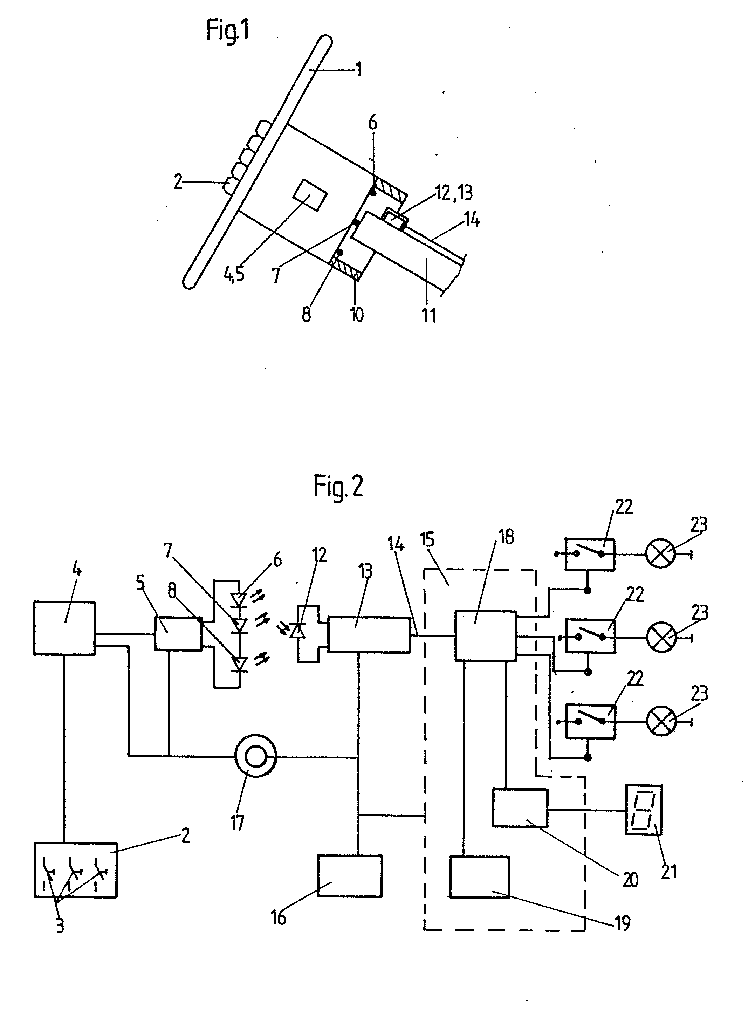

Am Lenkradkranz oder einer Lenkradspeiche eines Lenkrads 1
ist eine Tastatur 2 mit Bedientasten 3 angeordnet. In
Figur 2 sind zur Vereinfachung lediglich drei Tasten 3
dargestellt. In der Praxis werden beispielsweise Bedientasten für das Standlicht, das Ablendlicht, das Fernlicht, den Nebelscheinwerfer, die Nebelrückleuchte, den
normalen Dauerbetrieb des Scheibenwischers, den schnellen
Dauerbetrieb des Scheibenwischers, den Intervallbetrieb
des Scheibenwischers, den Intervallbetrieb des Scheibenwischers mit Scheibenwäsche, den linken Blinker, den
rechten Blinker und das Parklicht vorgesehen.

Die Bedientasten 3 sind an einen Sender 4 angeschlossen,
der einen Oszillator und einen Kodierer aufweist. Der
Kodierer arbeitet mit Pulskodemodulation in Abhängigkeit
von der jeweils betätigten Bedientaste. Über einen Verstärker 5 betreibt der Sender 4 in Reihe geschaltete
Sendedioden 6, 7 und 8.

Die Sendedioden 6, 7 und 8 sind gleichmäßig am Umfang
einer Lenkradnabe 9 verteilt angeordnet. Sie sind von
einer ringförmigen Blende 10 überdeckt. An einer feststehenden Lenksäule 11 ist eine Empfangsdiode 12 angeordnet. Diese ist von der Blende 10 überragt. Die
Empfangsdiode 12 liegt unabhängig von der Drehstellung

- 5 -

- 5 -

des Lenkrads 1 gegenüber der Lenksäule 11 immer im Strahlungsbereich einer der Sendedioden 6, 7 oder 8. Zur Verbesserung der Bestrahlung der Empfangsdiode 12 kann die Blende 10 innen reflektierend gestaltet sein.

Der Empfangsdiode 12 ist ein Vorverstärker 13 nachgeschaltet. Dieser ist mit einer Leitung 14 mit einem Empfänger 15 verbunden, der im Bereich des Armaturenbretts des Kraftfahrzeugs angeordnet ist. Der Sender 4, der Empfänger 15 und die Verstärker 5 und 13 sind aus einer Batterie 16 des Kraftfahrzeugs mit Strom versorgt. Zur Versorgung des Senders 4 und des Verstärkers 5 ist im Bereich zwischen Lenksäule 11 und Lenkradnabe 9 ein einziger Schleifringkontakt 17 nötig.

Als Empfänger kann ein 4-Bit-Mikroprozessor verwendet werden. Der Empfänger 15 weist einen Dekodierer 18 mit den Bedientasten 3 entsprechenden Ausgängen auf. Er ist mit einem Speicher 19 und einem Treiber 20 für eine Anzeigeeinheit 21 versehen.

Jedem Ausgang des Dekodierers 18 sind Schaltstufen 22 nachgeschaltet, die in Reihe zu den zu schaltenden Aggregaten 23 liegen.

Die Funktionsweise der beschriebenen Einrichtung ist etwa folgende:

Wird eine der Bedientasten 3 gedrückt, dann wird der Oszillator dementsprechend moduliert. Die Sendedioden 6,

- 6 -

- 6 -

7 und 8 strahlen ein Infrarotsignal ab, solange die betreffende Bedientaste 3 gedrückt ist. Unabhängig von der Lenkradstellung oder einer Lenkradbewegung empfängt die Empfangsdiode 12 die modulierte Frequenz. Der Dekodierer 18 gibt ein Schaltsignal an die betreffende Schaltstufe 22, so daß das der gedrückten Bedientaste 3 zugeordnete Aggregat 23 einschaltet. Gleichzeitig wird an der Anzeigeeinheit 21 das eingeschaltete Aggregat angezeigt.

Da eine Signalübertragung nur während der Betätigung der Bedientaste erfolgt, muß ein gewünschter Schaltzustand für solche Aggregate, wie beispielsweise das Abblendlicht, gespeichert werden, die auf einen Schaltbefehl einen bestimmten Schaltzustand annehmen und diesen halten sollen. Es ist hierfür der Speicher 19 vorgesehen. Es können jedoch auch in den einzelnen Schaltstufen 22 Haltekreise, wie beispielsweise Flip-Flops, geschaltet sein.

Der Speicher 19 kann auch dafür ausgelegt werden, daß nach dem Einschalten der Zündung sich ein vor dem Ausschalten der Zündung gewählter Schaltzustand erneut einstellt.

Wird als Empfänger ein Mikroprozessor eingesetzt, dann kann mit einer Zeitschaltung erreicht werden, daß zur Prüfung der Funktion der Aggregate die Ausgänge des Dekodierers 18 selbsttätig nacheinander geschaltet werden, so daß der Fahrer außerhalb des Fahrzeugs die Funktion der Beleuchtung überprüfen kann.

- 7 -

- 7 -

Bei Betätigung der Bedientasten 3 erfolgt eine serielle Ausgabe der Befehle. Durch eine entsprechende Vorschachtelung der Impulsfolge erscheint dem Benutzer der Vorgang als parallel. Günstig dabei ist, daß nur eine einzige Übertragungsstrecke, bestehend aus Verstärker 5, Sendedioden 6, 7 und 8, Empfangsdiode 12 und Vorverstärker 13 nötig ist.

Nach dem Einschalten der Zündung können auch die Lichthupe und die Hupe über die Infrarot-Übertragungsstrecke bedient werden. Es ist möglich, Schaltfunktionen oder zeitproportionale Steuerungen vorzusehen.

Blinkrelais und Intervallschalter können durch Halbleiter ersetzt werden.

- 8 -

P a t e n t a n s p r ü c h e

1.   Einrichtung zum Schalten elektrischer Aggregate
eines Kraftfahrzeugs, wobei Bedientasten für die Aggregate an dem Lenkradkranz oder Lenkradspeichen des
Kraftfahrzeugs angeordnet sind, welche über die Lenkradnabe und die feststehende Lenkradsäule an die Aggregate angeschlossen sind, dadurch gekennzeichnet, daß an
der Lenkradnabe (9) ein Infrarotsender (4) mit Oszillator
und Kodierer und wenigstens einem Sendebauteil (6, 7, 8)
befestigt ist, daß die Bedientasten (3) an den Kodierer
angeschlossen sind, daß an der Lenkradsäule (11) wenigstens ein Infrarot-Empfangsbauteil (12) angeordnet ist,
das an einen Empfänger (15) mit einem Dekodierer (18)
angeschlossen ist, daß der Dekodierer (18) mit Schaltern
(22) der Aggregate (23) verbunden ist und daß mehrere
Sendebauteile (6, 7, 8) und/oder mehrere Empfangsbauteile (12) so am Umfang der Lenkradnabe (9) bzw. der
Lenkradsäule (11) verteilt sind, daß in jeder Drehstellung des Lenkrads (1) wenigstens ein Empfangsbauteil (12)
im Strahlungsbereich eines Sendebauteils (6, 7, 8) liegt.

2.   Einrichtung nach Anspruch 1, dadurch gekennzeichnet, daß am Umfang der Lenkradnabe (9) mehrere Sendebauteile (6, 7, 8) angeordnet sind, deren gemeinsamer
Abstrahlbereich die Lenkradnabe (9) in einer ringförmigen
Zone umschließt und in dieser Zone das Empfangsbauteil (12)
angeordnet ist.

3.    Einrichtung nach Anspruch 1 oder 2, dadurch gekennzeichnet, daß der Strahlungsbereich der Sendebauteile (6,
7, 8) außen von einer Blende (10) abgeschlossen ist und
die Blende (10) das Empfangsbauteil (12) überragt.

4.    Einrichtung nach einem der vorhergehenden Ansprüche,
dadurch gekennzeichnet, daß der Dekodierer (18) entfernt
vom Empfangsbauteil (12) im Bereich des Armaturenbretts
des Kraftfahrzeugs angeordnet ist.

5.    Einrichtung nach einem der vorhergehenden Ansprüche,
dadurch gekennzeichnet, daß die Stromversorgung des
Senders (4) aus einer Batterie (16) des Kraftfahrzeugs
erfolgt.

6.    Einrichtung nach einem der vorhergehenden Ansprüche,
dadurch gekennzeichnet, daß dem Dekodierer (18) eine
Anzeigeeinheit (21) nachgeschaltet ist.

7.    Einrichtung nach einem der vorhergehenden Ansprüche,
dadurch gekennzeichnet, daß im Empfänger (15) ein
Speicher (19) vorgesehen ist, der von den Bedientasten (3)
eingeschaltete Aggregate (23) bis zur nächsten Betätigung
der betreffenden Bedientaste (3) eingeschaltet hält.

8.    Einrichtung nach einem der vorhergehenden Ansprüche,
dadurch gekennzeichnet, daß im Empfänger (15) ein
Speicher (19) vorgesehen ist, der während der Abschaltung
der Zündung des Kraftfahrzeugs die zuvor gewählten Schaltzustände speichert.

9.    Einrichtung nach einem der vorhergehenden Ansprüche, dadurch gekennzeichnet, daß mittels einer Zeitschaltung die Schaltstufen (22) nacheinander schaltbar sind.

Fig.1

Fig. 2

0088953

J P-4/82

Europäisches
Patentamt

**EUROPÄISCHER RECHERCHENBERICHT**

**0088953**
Nummer der Anmeldung

EP  83 10 2066

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | GB-A-2 074 313  (NISSAN) <br> * Seite 3, Zeile 12 - Seite 4, Zeile 16, Zeilen 34-42; Figuren 2,3a,4,6a * | 1,4,5 | B 60 Q  1/00 <br> B 60 S  1/08 // <br> H 04 B  9/00 <br> B 62 D  1/04 |
| | --- | | |
| A | EP-A-0 016 991  (SIEMENS) <br> * Seite 4, Zeilen 9-17, Zeile 25 - Seite 5, Zeile 12; Seite 9, Zeilen 1-4, Zeilen 11-13; Figuren 2a,3,7 * | 1,4,6 | |
| | --- | | |
| A | NL-A-8 002 446  (VENTURINI) <br><br> * Seite 4, Zeile 26 - Seite 5, Zeile 9; Seite 6, Zeilen 4-8, 28-34; Seite 8, Zeilen 5-8; Figuren 1-3 * | 1,5,7, 8 | |
| | --- | | RECHERCHIERTE SACHGEBIETE (Int. Cl. ³) |
| D,A | DE-A-3 018 247  (BOSCH) | | |
| | --- | | B 60 Q  1/00 <br> B 60 Q  1/40 <br> B 60 R  16/02 <br> B 60 C  23/00 <br> B 60 C  23/02 <br> B 60 C  23/04 <br> B 60 C  23/06 <br> B 60 C  23/08 <br> B 60 C  23/20 |
| D,A | DE-A-1 441 819  (PREH) | | |
| | ----- | | |

Der vorliegende Recherchenbericht wurde für alle Patentansprüche erstellt.

| Recherchenort <br> DEN HAAG | Abschlußdatum der Recherche <br> 24-06-1983 | Prüfer <br> VERLEYE J. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82